# EUROPÄISCHE PATENTANMELDUNG

(11) **EP 2 801 768 A2**
(43) Veröffentlichungstag der Anmeldung: **12.11.2014**
(21) Anmeldenummer: 14165787.4
(22) Anmeldetag: 24.04.2014
(51) Int. Cl.: F24J 2/54

(54) **Solargenerator und Schiene für einen Wagen**

(30) Priorität: 06.05.2013 DE 102013208205
(71) Anmelder: Aktiebolaget SKF, 41 550 Göteborg (SE)
(72) Erfinder: Edelmann, Ludwig, 97717 Sulzthal (DE); Gransow, Anita, 97526 Sennfeld (DE); Hofmann, Joachim, 97456 Dittelbrunn (DE); Jeschka, Erwin, 97711 Maßbach (DE); Kemmer, Martin, 97440 Werneck (DE); Velde, Henryk, 97440 Werneck (DE)
(74) Vertreter: Kuhstrebe, Jochen

(57) **Zusammenfassung**

Ein Solargenerator (100) gemäß einem Ausführungsbeispiel umfasst eine Generatoreinheit (110) und ein Führungsbauteil (120), wobei das Führungsbauteil (120) und die Generatoreinheit (110) derart ausgebildet sind, dass die Generatoreinheit (110) auf dem Führungsbauteil (120) entlang eines wenigstens abschnittsweise gebogenen Bewegungspfads (330) beweglich geführt wird, und wobei das Führungsbauteil (120) ausgebildet ist, um eine Orientierung der Generatoreinheit (110) senkrecht zu dem Bewegungspfad (330) entlang desselben zu führen und zu verändern. Ein Solargenerator (100) gemäß einem Ausführungsbeispiel kann so gegebenenfalls eine komplexe Führung der Generatoreinheit (110) mit konstruktiv einfacheren Mitteln ermöglichen.

## Beschreibung

Ausführungsbeispiele beziehen sich auf einen Solargenerator und eine Schiene für einen Wagen.

In vielen Bereichen der Technik besteht der Bedarf, Komponenten, Baugruppen und andere Teile entlang eines komplexen Bewegungspfads zu führen. Dieser Bedarf kann beispielsweise durch räumliche, technische, natürliche oder andere Randbedingungen gegeben sein. So kann es beispielsweise bei einer Führung von Gefäßen erforderlich oder ratsam sein, diese derart zu führen, dass beispielsweise durch eine Schüttbewegung das Gefäß entleert wird.

Aber auch bei anderen technischen Gebieten, beispielsweise der Energiegewinnung, kann es ratsam sein, Komponenten, Baugruppen und andere Teile entlang eines komplexen Bewegungspfads zu führen. Ein Beispiel stellt hier die Energiegewinnung auf Basis von Sonnenkollektoren dar. So verändert sich der Sonnenstand während eines Tages in Abhängigkeit von der jeweiligen Tageszeit aufgrund der Erdrotation. Würde also beispielsweise ein entsprechender Sonnenkollektor fest eingebaut, kann dies gegebenenfalls zu einem Verlust oder einer Reduzierung des möglichen Wirkungsgrads führen.

Es kann daher sinnvoll sein, eine entsprechende Nachführung des Sonnenkollektors über den Tag zu implementieren. Abhängig vom jeweiligen Standort des Sonnenkollektors auf der Erde überstreicht die Sonne hierbei einen gegebenenfalls großen Azimutalwinkelbereich, aufgrund dessen eine Nachführung auch des betreffenden Azimutalwinkels ratsam sein kann, um eine weitere Steigerung des Wirkungsgrads zu ermöglichen.

Zu diesem Zweck werden zum Teil zwei- oder drei-achsige Zustellsysteme mit entsprechenden Aktuatorsystemen und deren Bauteile, die beispielsweise Lagerungen und Steuereinheiten umfassen, implementiert. Bei diesen handelt es sich jedoch um vergleichsweise komplexe und damit gegebenenfalls aufwendige und teure Systeme.

Es besteht daher nicht nur im Bereich eines Solargenerators, sondern auch bei anderen technischen Gebieten ein Bedarf, eine komplexe Führung von Komponenten mit konstruktiv einfacheren Mitteln zu ermöglichen.

Diesen Bedarf trägt ein Solargenerator gemäß Patentanspruch 1 und eine Schiene für einen Wagen gemäß Patentanspruch 14 Rechnung.

Ein Solargenerator gemäß einem Ausführungsbeispiel umfasst eine Generatoreinheit und ein Führungsbauteil, wobei das Führungsbauteil und die Generatoreinheit derart ausgebildet sind, dass die Generatoreinheit auf dem Führungsbauteil entlang eines wenigstens abschnittsweise gebogenen Bewegungspfads beweglich geführt wird. Das Führungsbauteil ist hierbei ferner ausgebildet, um eine Orientierung der Generatoreinheit senkrecht zu dem Bewegungsgrad entlang desselben zu führen und zu verändern.

Bei einem Ausführungsbeispiel eines Solargenerators kann so das Führungsbauteil so ausgebildet sein, dass ein Winkel zwischen einer ersten und einer zweiten Referenzgeraden sich entlang des Bewegungspfads ändert. Beide Referenzgeraden verlaufen hierbei in einer sich entlang des Bewegungspfads mitbewegenden Ebene senkrecht zu dem Bewegungspfad. Sie stehen somit lokal jeweils senkrecht auf einer Tangente des Bewegungspfads. Die erste Referenzgerade ist hierbei der Generatoreinheit fest zugeordnet, steht also beispielsweise senkrecht auf einer ebenen Struktur oder einer anderen Komponente der Generatoreinheit. Die zweite Referenzgerade kann hierbei hinsichtlich ihrer Ausrichtung in der jeweils sich mitbewegenden Ebene fest mit dem Führungsbauteil oder aber einem anderen Bezugssystem verbunden oder diesem zugeordnet sein. So kann es sich bei der zweiten Referenzgeraden beispielsweise um eine senkrechte Linie handeln, die entlang eines Schwerefelds der Erde ausgerichtet ist.

Einem Solargenerator gemäß einem Ausführungsbeispiel liegt so die Erkenntnis zugrunde, dass auch eine komplexe Nachführung einer Generatoreinheit eines Solargenerators, die beispielsweise auf einem Sonnenstandsverlauf basieren kann, mit konstruktiv einfachen Mitteln umsetzbar ist. Hierdurch kann gegebenenfalls ein Aufbau vereinfacht und damit eine kostengünstigere Implementierung eines Solargenerators ermöglicht werden.

Bei einem Solargenerator gemäß einem Ausführungsbeispiel kann die Generatoreinheit wenigstens ein Fotovoltaikmodul umfassen. Hierdurch kann gegebenenfalls eine einfache, technisch robuste und trotzdem effiziente Energiegewinnung implementierbar sein. So können bei Fotovoltaikmodulen gegebenenfalls auftretende Fehlausrichtungen eine geringere Auswirkung auf den Wirkungsgrad der Generatoreinheit haben.

Bei einem Solargenerator gemäß einem Ausführungsbeispiel kann das Führungsbauteil derart ausgebildet sein, dass sich der Bewegungspfad um einen zentralen Punkt über einen vorbestimmten Winkelbereich von wenigstens 45° herum erstreckt. Bei anderen Ausführungsbeispielen kann der Winkelbereich auch wenigstens 90°, wenigstens 120°, wenigstens 150°, wenigstens 180°, wenigstens 270° oder voller 360° umfassen. Je weiter der Winkelbereich ist, desto genauer kann gegebenenfalls eine Nachführung der Generatoreinheit des Solargenerators ermöglicht werden. Andererseits kann gegebenenfalls durch eine Beschränkung des Winkelbereichs das Führungsbauteil kompakter und damit gegebenenfalls kostengünstiger ausgeführt werden. Eine genaue Wahl des Winkelbereichs kann hierbei beispielsweise von einem geplanten Einsatzort des Solargenerators auf der Erde abhängen.

Bei einem Solargenerator gemäß einem Ausführungsbeispiel kann das Führungsbauteil wenigstens abschnittsweise im Wesentlichen kreisbogenförmig oder ellipsenbogenförmig ausgestaltet sein. Hierdurch kann gegebenenfalls eine konstruktiv besonders einfache und damit gegebenenfalls kostengünstige Implementierung eines Solargenerators ermöglicht werden.

Ein Solargenerator gemäß einem Ausführungsbeispiel kann hierbei genau eine Antriebseinheit umfassen, wobei die Antriebseinheit ausgebildet ist, um die Generatoreinheit entlang des Bewegungspfads zu bewegen. So kann aufgrund der Implementierung des Führungsbauteils gegebenenfalls eine unabhängige Ansteuerung eines Azimutalwinkels eingespart werden. So ist es möglich, bei einem Solargenerator gemäß einem Ausführungsbeispiel mit genau einer Antriebseinheit auszukommen, die aufgrund der Implementierung des Führungsbauteils sowohl eine polare wie auch eine azimutale Nachführung der Generatoreinheit ermöglicht.

Bei einem solchen Solargenerator gemäß einem Ausführungsbeispiel kann die Antriebseinheit einen Elektromotor und ein Getriebe umfassen, über das der Elektromotor die Generatoreinheit antreibt. Hierdurch kann beispielsweise eine technisch zuverlässige, konstruktiv einfache und den jeweiligen Anwendungsbedingungen gezielt anpassbare Antriebseinheit implementiert werden. Über das Getriebe kann so ein an jeweiligen Betriebsbedingungen angepasster Elektromotor zum Einsatz kommen. Das Getriebe kann hierbei gegebenenfalls auch schaltbar ausgeführt sein, jedoch genauso gut ebenso nur zwei ineinandergreifende Zahnräder umfassen. Bei einem Ausführungsbeispiel kann die Antriebseinheit beispielsweise genau einen Elektromotor umfassen.

Bei einem solchen Solargenerator gemäß einem Ausführungsbeispiel kann die Antriebseinheit eine mit der Generatoreinheit mechanisch gekoppelte Mitnehmerstange umfassen, die derart gebildet und angeordnet ist, dass die Generatoreinheit durch ein Schwenken der Mitnehmerstange um eine Achse entlang des Bewegungspfads antreibbar ist. Hierdurch kann eine gegebenenfalls technisch einfache und dennoch zuverlässige Antriebsmethode implementiert werden. Je nach konkreter Ausgestaltung kann hierbei die Mitnehmerstange an der Generatoreinheit schwenkbar gelagert sein und/oder hinsichtlich ihrer Länge veränderbar sein.

Bei einem Solargenerator gemäß einem Ausführungsbeispiel, der eine Antriebseinheit umfasst, kann die Antriebseinheit ausgebildet sein, um die Generatoreinheit mit einer gleichmäßigen Geschwindigkeit, beispielsweise einer gleichmäßigen Winkelgeschwindigkeit und/oder Translationsgeschwindigkeit, entlang des Bewegungspfads zu bewegen. Hierdurch kann gegebenenfalls eine Ansteuerung der Antriebseinheit vereinfacht werden und somit der Aufbau des Solargenerators weiter vereinfacht werden.

Bei einem Solargenerator gemäß einem Ausführungsbeispiel kann die Generatoreinheit einen Profilschienenwagen und das Führungsbauteil eine Profilschiene umfassen. Alternativ oder ergänzend kann bei einem Solargenerator gemäß einem Ausführungsbeispiel die Generatoreinheit einen Laufwagen und das Führungsbauteil eine Führungsschiene für den Laufwagen umfassen. Hierdurch kann gegebenenfalls eine Herstellung eines solchen Solargenerators vereinfacht werden, indem präzise herstellbare Komponenten im Rahmen der Generatoreinheit und des Führungsbauteils zum Einsatz kommen. Hierdurch kann also gegebenenfalls eine Konstruktion eines Solargenerators weiter vereinfacht werden.

Bei einem Solargenerator gemäß einem Ausführungsbeispiel kann das Führungsbauteil derart ausgebildet sein, dass ausgehend von einer vorbestimmten Lage des Führungsbauteils die Generatoreinheit hinsichtlich ihrer Orientierung senkrecht zu dem Bewegungspfad bei einer Bewegung entlang des Bewegungspfads einem Orientierungsverlauf senkrecht zu dem Bewegungspfad folgt, der auf einem für eine vorbestimmte Region auf der Erde vorbestimmten Sonnenstandsverlauf basiert. So kann der Orientierungsverlauf beispielsweise derart ausgelegt sein, dass dieser einem mittleren Sonnenstandsverlauf während des Jahres entspricht. So kann beispielsweise bei einem Solargenerator gemäß einem Ausführungsbeispiel die Führungsstruktur derart ausgebildet sein, dass der vorbestimmte Sonnenstandsverlauf einem Sonnenstandsverlauf während eines Wintermonats und/oder eines Herbstmonats entspricht. So kann beispielsweise für einen für die Nordhalbkugel der Erde ausgelegten Solargenerator auf einem Sonnenstandsverlauf ausgelegt sein, der in einem der Monate Oktober, November, Dezember, Januar, Februar oder März auftritt. Entsprechend kann für einen Solargenerator, der auf der Südhalbkugel zum Einsatz kommen soll, beispielsweise ein Sonnenstandsverlauf eines der Monate April, Mai, Juni, Juli, August oder September verwendet werden.

Ausführungsbeispiele umfassen ferne eine Schiene für einen Wagen, die sich entlang eines wenigstens abschnittsweise gebogenen Bewegungspfads erstreckt und derart ausgebildet ist, dass der Wagen entlang der Schiene beweglich geführt wird, wobei die Schiene ausgebildet ist, um eine Orientierung des Wagens senkrecht zu dem Bewegungspfad entlang desselben zu führen und zu verändern.

So liegt einer Schiene gemäß einem Ausführungsbeispiel die Erkenntnis zugrunde, dass nicht nur im Falle eines Solargenerators gemäß einem Ausführungsbeispiel eine entsprechende komplexe Führung von Komponenten mit konstruktiv einfachen Mitteln erzielbar ist. So kann auf Basis einer Schiene gemäß einem Ausführungsbeispiel auch eine entsprechende komplexe Führung einer Komponente in anderen technischen Gebieten realisiert werden.

Bei einer Schiene gemäß einem Ausführungsbeispiel kann es sich so um eine Profilschiene für einen Profilschienenwagen oder um eine Führungsschiene für einen Laufwagen handeln.

Hierbei kommt eine kraftschlüssige oder reibschlüssige Verbindung durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit insbesondere eine Normalkraftkomponente zwischen den beiden Verbindungspartnern voraus.

Nachfolgend werden unter Bezugnahme auf die beigefügten Figuren Ausführungsbeispiele näher beschrieben und erläutert.
Fig. 1 zeigt eine perspektivische Darstellung eines Solargenerators gemäß einem Ausführungsbeispiel;
Fig. 2 zeigt eine Aufrisszeichnung des Solargenerators aus Fig. 1;
Fig. 3 zeigt eine perspektivische Darstellung einer Schiene gemäß einem Ausführungsbeispiel, wie sie im Rahmen des Führungsbauteils des in Fig. 1 gezeigten Solargenerators gemäß einem Ausführungsbeispiel zum Einsatz kommt;
Fig. 4 zeigt eine perspektivische Darstellung der Schiene aus Fig. 3 mit an unterschiedlichen Orten angeordneten Wagen, um die Änderung der Orientierung zu illustrieren; und
Fig. 5 zeigt ein Diagramm, welches in Abhängigkeit eines Fehlorientierungswinkels einen hierauf zurückzuführenden Leistungsverlust darstellt.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

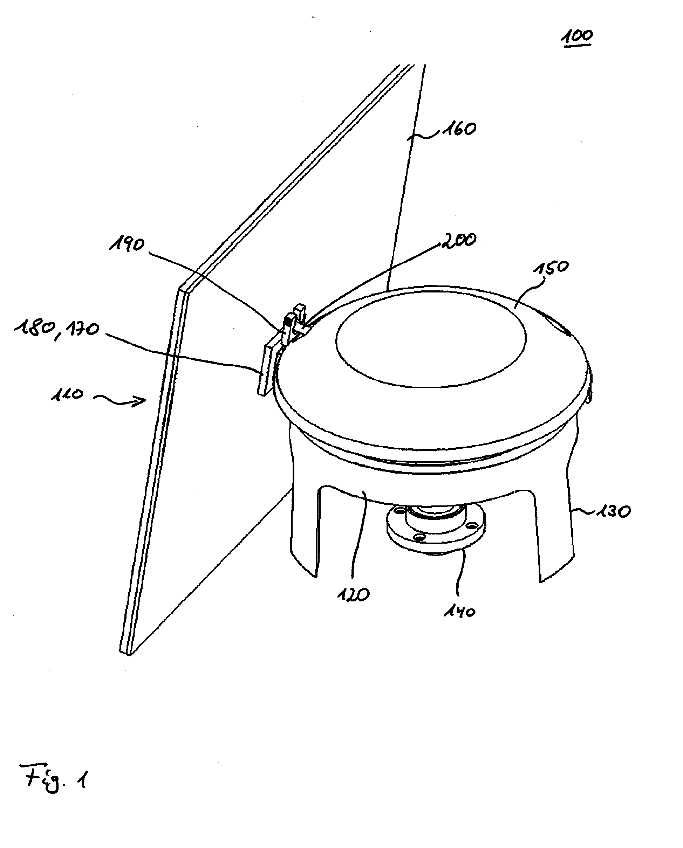

Fig. 1 zeigt eine perspektivische Darstellung eines Solargenerators 100 gemäß einem Ausführungsbeispiel. Der Solargenerator 100 umfasst eine Generatoreinheit 110 und ein Führungsbauteil 120. Das Führungsbauteil 120 umfasst hierbei ein Gestell 130, an dem eine in Fig. 1 nicht gezeigte bzw. nicht als solche erkennbare Schiene gemäß einem Ausführungsbeispiel angebracht ist. Das Gestell 130 ist hierbei als im Wesentlichen rundes Gestell ausgeführt, welches über drei Beine auf einem Untergrund abstellbar ist. Dadurch, dass drei Beine verwendet werden, kann gegebenenfalls ein Kippen bzw. ein Wackeln des Solargenerators 100 oder seine Generatoreinheit 110 unterbunden werden.

Der Solargenerator 100 umfasst ferner eine Antriebseinheit 140 sowie eine Abdeckhaube 150, die beispielsweise als Wetterschutz dienen kann. Die Abdeckhaube 150 stellt hierbei eine optionale Komponente dar, die gegebenenfalls auch anders ausgeführt sein kann.

Die Generatoreinheit 110 umfasst ein Fotovoltaikmodul 160, welches an einem Wagen 170 befestigt ist. Bei dem Wagen 170 handelt es sich genauer gesagt um einen Profilschienenwagen 180, an dem über ein Distanzstück 190 eine Mitnehmerstange 200 schwenkbar gelagert ist. Die Mitnehmerstange 200 ist hierbei hinsichtlich ihrer Länge veränderbar.

Das Fotovoltaikmodul 160 wird auch als Solarpanel bezeichnet. Entsprechend wird die Antriebseinheit 140, zu der auch die Mitnehmerstange 200 zählt, als Solarpanel-Verstelleinheit bezeichnet.

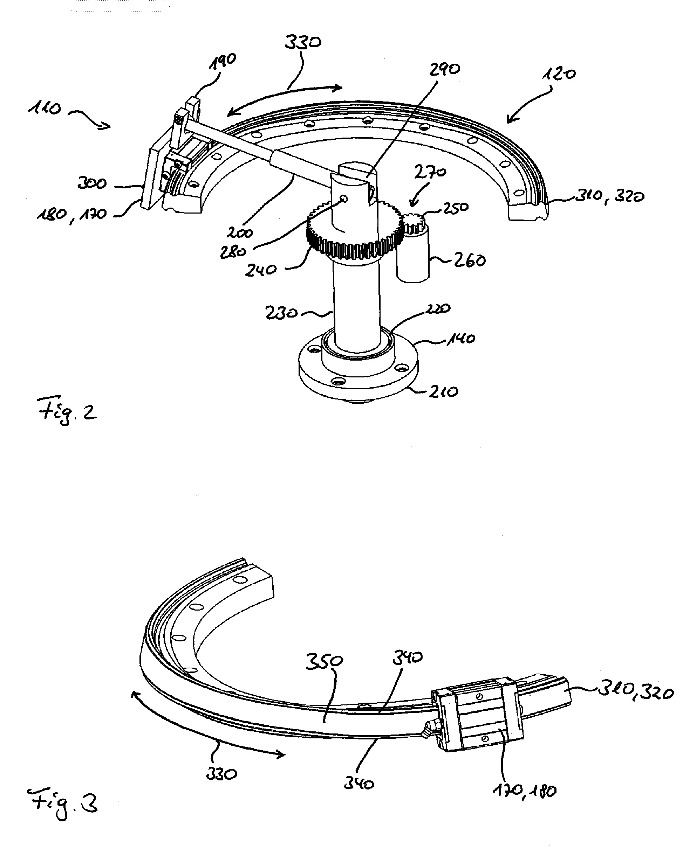

Während Fig. 1 eine Darstellung der gesamten Einheit des Solargenerators 100 gemäß einem Ausführungsbeispiel zeigt, zeigt Fig. 2 eine perspektivische Darstellung einer Lagereinheit des Solargenerators 100 sowie eine genauere Darstellung der Antriebseinheit 140. Die Antriebseinheit 140 umfasst die bereits zuvor gezeigte Mitnehmerstange 200, die über das Distanzstück 190 an dem Wagen 170 schwenkbar gelagert ist. Der Wagen 170 ist hier als Profilschienenwagen ausgeführt. Die Mitnehmerstange 200 ist hinsichtlich ihrer Länge veränderbar ausgeführt, sodass zusammen mit der schwenkbaren Lagerung an dem Distanzstück 190 eine Änderung einer Orientierung des Wagens 170 und damit der Generatoreinheit 110, von der jedoch das Fotovoltaikmodul 160 in Fig. 2 nicht gezeigt ist, ermöglicht.

Die Antriebseinheit 140 umfasst ein Befestigungsbauteil 210, welches über eine Mehrzahl von Löchern beispielsweise mit Drehfundamenten oder anderen Befestigungstechniken, beispielsweise Verschraubungen oder auch Bolzen an dem Untergrund hinsichtlich einer Drehbewegung formschlüssig verbindbar ist. In dem Befestigungsbauteil 210 ist über ein Lager 220, das beispielsweise als Rillenkugellager, Zylinderrollenlager, Kegelrollenlager, Nadelrollenlager oder auch als Gleitlager implementiert sein kann, eine Welle 230 angebracht. Das Lager 220 kann gegebenenfalls auch als Lagereinheit, beispielsweise auf Basis einer Nabeneinheit aus dem Fahrzeugbereich (Hub Unit) implementiert sein.

Mit der Welle 230 ist ein erstes Zahnrad 240 drehfest verbunden, welches im Eingriff mit einem zweiten Zahnrad 250 steht, das wiederum mit einer Antriebswelle eines Elektromotors 260 verbunden ist. Das erste und das zweite Zahnrad 240, 250 bilden zusammen ein Getriebe 270 über das die in Fig. 2 nur teilweise gezeigte Generatoreinheit 110 durch den Elektromotor 260 antreibbar ist. Das zweite Zahnrad 250 des Getriebes 270 ist hierbei kleiner als das erste Zahnrad 240 und wird daher auch als Ritzel bezeichnet. Fig. 2 zeigt hierbei lediglich eine teilweise Darstellung des Solargenerators 100, bei dem beispielsweise eine mechanische Aufnahme des Elektromotors 260 an dem ebenfalls in Fig. 2 nicht gezeigten Gestell 130 nicht dargestellt ist.

Die Mitnehmerstange 200 ist über ein Lager 280 und eine Ausnehmung 290 in der Welle 230 schwenkbar aufgenommen. Die Mitnehmerstange 200 ist hierbei als Teleskopstange ausgeführt, sodass sie hinsichtlich ihrer Länge veränderbar ist. Hierdurch kann ein gegebenenfalls notwendiger Längenunterschied, der sich aufgrund der Änderung der Orientierung des Wagens 170 bei einer Bewegung ergeben kann, ausgeglichen werden.

Anstelle des Lagers 280 kann gegebenenfalls auch eine einfachere Lagertechnik eingesetzt werden, wie beispielsweise eine einfache schwenkbare Führung über einen Stift in der Welle 230. Die Mitnehmerstange 200 ist bei dem hier gezeigten Ausführungsbeispiel über ein Kugelgelenk mit dem Distanzstück 190 des Wagens 170 linear verschiebbar und entsprechend zweifach drehverstellbar verbunden.

Je nach konkreter Implementierung kann die Generatoreinheit 110 bzw. ihr Wagen 170 eine Adapterplatte 300 umfassen, die gegebenenfalls eine Auflagefläche für das in Fig. 2 nicht gezeigte Fotovoltaikmodul 160 und eine entsprechende Anpassung der Befestigungsstrukturen für dieses ermöglichen kann. Hierbei kann es sich jedoch gegebenenfalls um eine optionale Komponente handeln.

Um nun einerseits eine Nachführung der Generatoreinheit 110 während des Tages an den Sonnenstand entlang des Polarwinkels und entlang des Azimutalwinkels zu ermöglichen, weist der Solargenerator 100 ferner eine Schiene 310 auf, die im vorliegenden Fall als Profilschiene 320 ausgebildet ist. Die Schiene 310 ist hierbei im Wesentlichen kreisbogenförmig ausgestaltet und erstreckt sich bei dem in Fig. 2 gezeigten Ausführungsbeispiel über einen Winkelbereich von etwa 180°. Bei anderen Ausführungsbeispielen kann der entsprechende Winkelbereich jedoch auch größere oder kleinere Werte annehmen. Ebenso kann die Schiene 310 bzw. das Führungsbauteil 120 gegebenenfalls auch wenigstens abschnittsweise ellipsenbogenförmig ausgestaltet sein. Unabhängig von der genauen Ausgestaltung der Schiene 310 bzw. des Führungsbauteils 120 ist bei dem hier gezeigten Solargenerator 100 die Welle 230 im Bereich eines zentralen Punkts angeordnet, um den sich der zuvor genannte Winkelbereich herum erstreckt. Über eine entsprechende Mehrzahl von Bohrungen, Löchern oder anderen Befestigungsstrukturen kann die Schiene 310 beispielsweise mit dem in Fig. 2 nicht gezeigten Gestell 130 mechanisch verbunden werden.

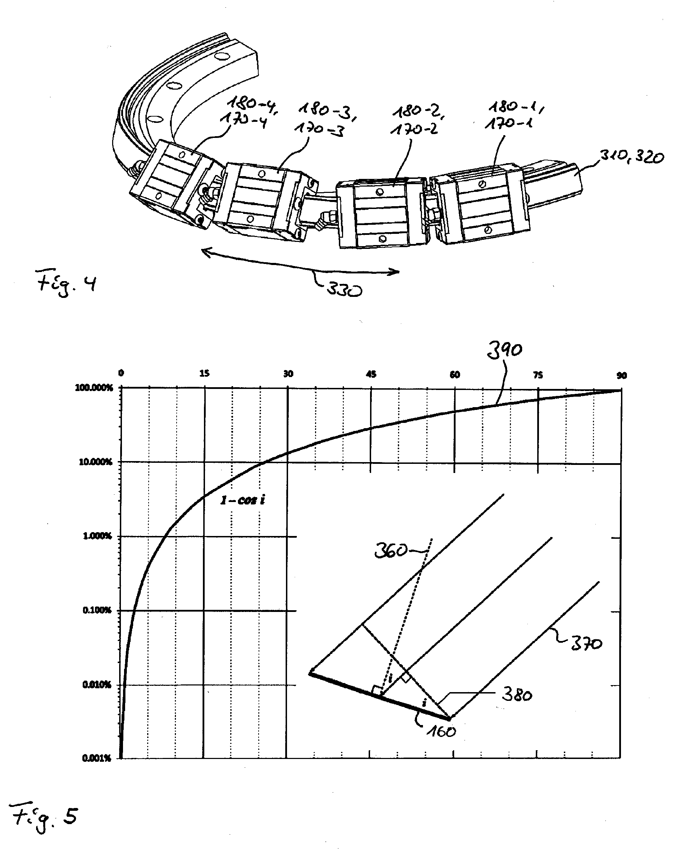

Die Schiene 310 und damit das Führungsbauteil 120 sind zusammen mit dem Wagen 170 der Generatoreinheit 110 nun gerade derart ausgebildet, dass der Wagen 170 an der Schiene 310 sich entlang eines durch die Schiene 310 definierten Bewegungspfads 330 bewegen kann und hierbei entsprechend geführt wird. Wie insbesondere im Zusammenhang mit den Fig. 3 und 4 noch mehr erläutert wird, sind die Schiene 310 und der Wagen 170 hierbei gerade so ausgebildet, dass eine Orientierung des Wagens 170 und damit der Generatoreinheit 110 senkrecht zu dem Bewegungspfad 330 entlang desselben nicht nur ermöglicht wird, sondern die Orientierung auch gezielt verändert wird.

Hierdurch kann sowohl eine Nachführung der Generatoreinheit 110 und ihres in Fig. 2 nicht gezeigten Fotovoltaikmoduls 160 entlang des Polarwinkels sowie des Azimutalwinkels mithilfe genau einer einzigen Antriebseinheit mit genau einem Elektromotor 260 ermöglicht werden. Hierdurch kann gegebenenfalls durch den Einsatz konstruktiv einfacher Mittel eine Implementierung einer zweiten Antriebseinheit zur Veränderung des Azimutalwinkels eingespart werden. Hierdurch kann es also möglich sein, trotz einer Nachführung der Generatoreinheit 110 um den Azimutalwinkel den Solargenerator 100 gemäß einem Ausführungsbeispiel zu vereinfachen.

Die Schiene 170 ermöglicht so aufgrund der Änderung der Orientierung des Wagens 170 eine Führung desselben nicht nur in der durch die Schiene definierten Ebene, sondern ebenfalls durch Veränderung des entsprechenden Winkels (Tilt-Winkel) entlang einer zusätzlichen Richtung. Die Schiene 310 ermöglicht so eine "dreidimensionale Führung".

Fig. 3 zeigt eine perspektivische Darstellung der als Profilschiene 320 ausgeführten Schiene 310. Auf der Schiene 310 ist in Fig. 3 ferner der Wagen 170 eingezeichnet, der - wie zuvor erwähnt - als Profilschienenwagen 180 implementiert ist. Selbstverständlich kann bei anderen Ausführungsbeispielen gegebenenfalls auch eine andere Laufwagenführung, beispielsweise eine Führung auf Basis eines Laufwagens und einer entsprechenden Führungsschiene für einen Laufwagen umgesetzt werden. Der entsprechende Laufwagen weist hierbei typischerweise eine Mehrzahl von Laufrollen oder Laufrädern auf, die über Rillenkugellager, Nadellager oder andere Lager geführt sind. Im Unterschied zu einem Profilschienenwagen, bei dem sich die Wälzkörper relativ zu diesem längs bewegen können, sind die Laufräder des Laufwagens mit diesem zwar drehbar, jedoch hinsichtlich einer translatorischen Bewegung im Allgemeinen ortsfest verbunden.

Die Schiene 310, wie sie in Fig. 3 gezeigt ist, erstreckt sich hierbei um etwa 180° und weist eine Mehrzahl von Laufbahnen 340 auf, auf denen in Fig. 3 nicht gezeigte Wälzkörper, beispielsweise kugelförmige Wälzkörper, des Wagens 170 abrollen können. Die Wälzkörper werden hierbei im Falle einer Implementierung als Profilschienenwagen 180 in diesem zurückgeführt, sodass der Profilschienenwagen 180 im Grunde genommen eine beliebige Distanz entlang des Bewegungspfads 330 zurücklegen kann. Zwischen den in Fig. 3 gezeigten Laufbahnen 340 ist ein Abschnitt 350 eingezeichnet, anhand dessen Verlaufs bereits in Fig. 3 eine Änderung der Orientierung des Wagens 170 bzw. der entsprechenden Generatoreinheit 110 (nicht gezeigt in Fig. 3) ersichtlich ist. Entlang des Bewegungspfads 330 ändert sich so ein Winkel zwischen einer Flächennormalen auf dem Abschnitt 350, die in der Ebene liegt, die senkrecht von dem Bewegungspfad 330 durchstoßen wird, zu einer entsprechenden Referenzgeraden, die beispielsweise durch das Schwerkraftfeld der Erde gegeben sein kann, also beispielsweise senkrecht nach unten verlaufen kann. Dieser Winkel, der auch als Tilt-Winkel bezeichnet wird, dient zum Anpassen des Azimutalwinkels der in Fig. 3 nicht gezeigten Generatoreinheit 110.

Diese Änderung der Orientierung wird im Zusammenhang mit Fig. 4 näher erläutert, wobei die entsprechende Struktur der Schiene 310 beispielsweise durch ein Mehrachsschleifen, ein Mehrachsfräsen oder auch durch ein Biegen, ein Sintern oder ein anderes Herstellungsverfahren umsetzbar ist, bei dem beispielsweise ein Material, welches beispielsweise Aluminium, Stahl oder ein Verbundmaterial umfasst, ähnlich der Herstellung eines Skis geformt wird. Selbstverständlich können entsprechende Schienen 310 auch mithilfe anderer Herstellungsverfahren hergestellt werden.

Die Schienen 310 können hierbei gegebenenfalls einteilig bzw. einstückig, jedoch auch mehrstückig ausgeführt sein. Gegebenenfalls kann es im Falle einer mehrstückigen Ausfertigung ratsam sein, diese im Bereich der Stoßstellen zwischen den Schienen entsprechend auszuarbeiten bzw. derart anzuordnen, sodass die Laufbahnen 340 in diesem Bereich möglichst durchgängig sind.

Fig. 4 zeigt eine grundsätzlich Fig. 3 sehr ähnliche Darstellung der Schiene 310 bzw. der Profilschiene 320. Im Unterschied zu der Darstellung der Fig. 3 ist jedoch zur Verdeutlichung der Änderung der Orientierung des Wagens 170 bzw. des Profilschienenwagens 180 dieser in vier unterschiedlichen Positionen eingezeichnet, die entsprechend als Positionen 170-1, ..., 170-4 bzw. 180-1, ..., 180-4 dargestellt sind. So kann beispielsweise die Stellung des Wagens 170-1 eine Wagenstellung bzw. Panelstellung des Fotovoltaikmoduls 160 (nicht gezeigt in Fig. 4) am Morgen während des Sonnenaufgangs entsprechen, wobei der Wagen 170 an dieser Stelle beispielsweise einen Winkel von etwa 10° gegenüber dem Horizont, also gegenüber der durch die Schiene 310 definierten Ebene aufweist und etwa Richtung Osten ausgerichtet ist. Mit zunehmender Tageszeit wird dann durch die Antriebseinheit 140 der Wagen 170 in die Stellungen 170-2 und 170-3 verfahren, bevor der Wagen die Stellung 170-4 etwa zur Mittagszeit annimmt, wobei der Wagen 170 in dieser Position bzw. einen Winkel von etwa 75° gegenüber dem Horizont aufweist, während dieser in Richtung Süden ausgerichtet ist. Der Solargenerator 100 kann also hinsichtlich seines Führungsbauteils 120 derart ausgebildet sein, dass ausgehend von einer vorbestimmten Lage des Führungsbauteils 120 die Generatoreinheit hinsichtlich ihrer Orientierung senkrecht zu dem Bewegungspfad 330 bei einer Bewegung entlang desselben einem Orientierungsverlauf senkrecht zu dem Bewegungspfad 330 folgt, der auf einem für eine bestimmte oder vorbestimmte Region auf der Erde vorbestimmten Sonnenstandsverlauf basiert. So kann beispielsweise das in Fig. 3 gezeigte Gestell 130 eine Markierung aufweisen, die eine Ausrichtung des Solargenerators 100 bzw. seines Führungsbauteils 120 zu einer vorbestimmten Himmelsrichtung, also beispielsweise nach Süden ermöglicht. Die Schiene 310 bzw. das Führungsbauteil 120 kann dann derart ausgerichtet sein, dass der sich hierdurch über den Tag ergebende Orientierungsverlauf der Generatoreinheit 110 bzw. des Wagens 170 einem entsprechenden Sonnenstandsverlauf entspricht. Dieser kann beispielsweise einem Tag eines Wintermonats und/oder einem Herbstmonat entsprechen, bei dem aufgrund geringerer Temperaturen in vielen Regionen der Erde ein höherer Energiebedarf als während der Sommermonate besteht. Je nach konkreter Implementierung kann es jedoch auch für heiße Regionen gegebenenfalls ratsam sein, einen entsprechenden Sonnenstandsverlauf eines Sommermonats als Basis für den entsprechenden Orientierungsverlauf heranzuziehen. Ebenso kann gegebenenfalls eine Anpassung des Solargenerators 100 für Verhältnisse auf der Südhalbkugel ratsam sein, wobei die vorhergegangene Beschreibung sich auf die Verhältnisse auf der nördlichen Hemisphäre bezieht.

Der genaue Sonnenstandsverlauf kann hierbei beispielsweise mithilfe gängiger Verfahren berechnet oder auch in entsprechenden Nachschlagewerken nachgesehen werden.

Ein Solargenerator 100 gemäß einem Ausführungsbeispiel ermöglicht so eine Nachführung eines Solarpanels oder eines Fotovoltaikmoduls 160, um eine möglichst hohe Energieausbeute zu ermöglichen oder zu gewährleisten. Zu diesem Zweck nutzt das in den Fig. 1 bis 4 gezeigte Ausführungsbeispiel eines Solargenerators 100 eine "dreidimensional verlaufende" Laufbahn im Rahmen einer Wälzlagerung.

Durch die Verwendung von beispielsweise vorausberechneten Sonnenständen und einem entsprechend dreidimensional ausgeformten Führungsbauteil 120 bzw. einer entsprechend ausgeformten Schiene 310 mit entsprechenden Lagelaufbahnen kann so das entsprechende Solarpanel nicht nur hinsichtlich des Polarwinkels, sondern zusätzlich auch hinsichtlich des Azimutalwinkels verstellt werden. Die Lagelaufbahn trägt hierbei vermittels des Wagens 170 das betreffende Panel. Hierbei kann die Verstellgeschwindigkeit beispielsweise durch eine einfache Zeituhr gesteuert werden, sodass diese ungefähr dem Sonnenstand während des Tages folgt. Hierbei kann also die Generatoreinheit 110 beispielsweise eine gleichmäßige Geschwindigkeit entlang des Bewegungspfads 330 aufweisen, wobei es sich bei der Geschwindigkeit sowohl um eine Winkelgeschwindigkeit wie auch um eine Translationsgeschwindigkeit handeln kann.

Das Panel (Fotovoltaikmodul 160) kann so dem Sonnenaufgang im Osten bis zum Untergang im Westen folgen. Hierbei wird das Panel entsprechend einer in die Schienenführung eingebrachten dreidimensionalen Laufbahnkurve morgens im Osten zusätzlich geneigt, mittags in Abhängigkeit des betreffenden Breitengrads annähernd senkrecht gestellt und abends im Westen wieder geneigt. Je nach konkreter Ausgestaltung eines Solargenerators 100 kann so beispielsweise eine für langsam drehende Objekte verwendete Technik, die sogenannte Slewing-Bearing-Technik im Rahmen der Schiene 310 (Innenring) eingesetzt werden.

Hierdurch kann gegebenenfalls eine zwei- oder dreiachsige Zustellung durch entsprechende Aktuatorsysteme und deren Bauteile zusammen mit entsprechenden Lagerungen und Steuereinheiten eingespart werden. So kann gegebenenfalls eine einfachere Realisation einer Panelnachführung mithilfe nur einer einzigen zeitgesteuerten Achse umgesetzt werden. Diese kann gegebenenfalls einfacher und/oder robuster als komplexere zwei- oder dreidimensionale Steuerungen ausgeführt werden, die gegebenenfalls entfallen können. Ebenso können gegebenenfalls Bauteile eingespart werden, was zu einer Reduzierung der Kosten beitragen kann. Durch den Einsatz von Profilschienenführungen bzw. Laufwagenführungen kann darüber hinaus gegebenenfalls eine höhere, gegebenenfalls gleichbleibendere Präzision erzielbar sein.

Je nach konkreter Implementierung, insbesondere je nach Region auf der Erde, wo ein entsprechender Solargenerator 100 gemäß einem Ausführungsbeispiel zum Einsatz kommt, können jedoch Schwankungen auftreten, die gegebenenfalls zu einer tendenziell eher geringeren Reduzierung des Wirkungsgrads des Fotovoltaikmoduls 160 führen können. Nicht berücksichtigt sind so beispielsweise Schwankungen, welche durch die Jahreszeiten hervorgerufen werden können. Diese können jedoch gegebenenfalls beim Einsatz von Fotovoltaikmodulen 160 bzw. anderen Solarpanelen auch bei geringeren Winkelabweichungen dennoch einen genügend hohen Energieausbeutegrad ermöglichen, sodass auch in gemäßigten Breiten noch ein Betrieb derselben rentabel möglich sein sollte. Je näher ein Solargenerator 100 jedoch am Äquator zum Einsatz kommt, desto geringer werden auch entsprechende Abweichungen, sodass gegebenenfalls hier eine Erhöhung des Wirkungsgrads zu erwarten sein könnte.

Um dies näher zu illustrieren, zeigt Fig. 5 eine Darstellung eines Fotovoltaikmoduls 160, welches unter einem Winkel i zu einer Flächennormalen 360 des Fotovoltaikmoduls zu einem einfallenden Sonnenstrahl 370 ausgerichtet ist. Hierdurch ergibt sich aufgrund der geometrischen Anordnung, wie sie in Figur 5 gezeigt ist, eine effektive Fläche 380, welche kleiner als die eigentliche Fläche des Fotovoltaikmoduls 160 ist.

So zeigt Fig. 5 ferner einen Verlauf 390 eines direkt auf eine Fehlausrichtung (Winkel i) zurückzuführenden Leistungsverlusts in Abhängigkeit von dem Fehljustierungswinkel i in Grad. Der Verlauf 390 folgt hierbei im Wesentlichen einer Abhängigkeit 1-COS i.

Gegebenenfalls kann es - wie zuvor bereits angedeutet wurde - zur Verminderung entsprechender Verluste ratsam sein, entsprechend den regionalen Unterschieden unterschiedlich ausgeformte Führungsbauteile 120 bzw. Schienen 310 zum Einsatz zu bringen. So ist es denkbar, eine einer mittleren Abweichung entsprechende, dem Breitengrad angepasste, unterschiedlich verdrehte Laufbahn in die Schiene 310 einzubringen, welche unterschiedliche Winkel des Wagens 170 hervorruft. Wie zuvor bereits erwähnt wurde, kann eine solche Schiene 310 beispielsweise durch ein mehrachsiges Schleifen, Fräsen sowie durch eine entsprechende Verformung herstellbar sein.

Während zuvor im Zusammenhang mit den Fig. 1 bis 4 im Wesentlichen Solargeneratoren 100 gezeigt wurden, bei denen das Führungsbauteil 120 bzw. seine Schiene 310 annähernd einen 180° umfassenden Halbkreis umfassen, kann selbstverständlich bei anderen Ausführungsbeispielen ein entsprechender Winkelbereich anders gewählt werden. So kann beispielsweise auch ein 360° umfassender Ring als Schiene 310 ausgeformt werden, welche eine entsprechend eingearbeitete dreidimensionale Laufbahn umfasst. Hierdurch kann gegebenenfalls eine 24 Stunden laufende Antriebseinheit 140 realisiert werden, wodurch gegebenenfalls diese weiter vereinfacht werden kann.

Ein Solargenerator 100 ermöglicht so eine Solarpanelnachstellung auf Basis eines Führungsbauteils 120, welches die betreffende Generatoreinheit 110 unterschiedlich senkrecht zu dem Bewegungspfad 330 orientiert.

Neben den zuvor gezeigten Ausführungen auf Basis einer Profilschiene 320 und eines entsprechenden Profilschienenwagens 180 können selbstverständlich entsprechende Schienen 310 auch auf Basis einer Führungsschiene für einen Laufwagen und einen entsprechenden Laufwagen umgesetzt werden. Auch wenn zuvor im Wesentlichen mehrteilige Ausführungen des Führungsbauteils 120 sowie der Generatoreinheit 110 beschrieben wurden, können diese selbstverständlich bei anderen Ausführungsbeispielen eines Solargenerators 100 auch anders ausgeführt sein. So kann beispielsweise eine entsprechende Laufbahn, welche im Rahmen der Schiene 310 in den hier gezeigten Ausführungsbeispielen implementiert war, auch direkt in das Führungsbauteil 120 bzw. sein Gestell 130 implementiert werden. Entsprechend kann gegebenenfalls auch eine Anzahl von Komponenten reduzierbar sein, welche die Generatoreinheit 110 umfassen.

Ein Solargenerator 100 und eine Schiene 310 gemäß einem Ausführungsbeispiel können so gegebenenfalls eine komplexe Führung der Generatoreinheit 110 oder einer anderen Komponente mit konstruktiv einfacheren Mitteln ermöglichen.

Die in der vorstehenden Beschreibung, den Ansprüchen und den Zeichnungen offenbarten Merkmale können sowohl einzeln, wie auch in beliebiger Kombination für die Verwirklichung eines Ausführungsbeispiels in ihren verschiedenen Ausgestaltungen von Bedeutung und implementiert sein.

### Bezugszeichenliste

- 100: Solargenerator
- 110: Generatoreinheit
- 120: Führungsbauteil
- 130: Gestell
- 140: Antriebseinheit
- 150: Abdeckhaube
- 160: Fotovoltaikmodul
- 170: Wagen
- 180: Profilschienenwagen
- 190: Distanzstück
- 200: Mitnehmerstange
- 210: Befestigungsbauteil
- 220: Lager
- 230: Welle
- 240: Erstes Zahnrad
- 250: Zweites Zahnrad
- 260: Elektromotor
- 270: Getriebe
- 280: Lager
- 290: Ausnehmung
- 300: Adapterplatte
- 310: Schiene
- 320: Profilschiene
- 330: Bewegungspfad
- 340: Laufbahn
- 350: Abschnitt
- 360: Flächennormaler
- 370: Sonnenstrahl
- 380: Effektive Fläche
- 390: Verlauf

## Patentansprüche

1. Solargenerator (100) mit folgenden Merkmalen:
einer Generatoreinheit (110); und
einem Führungsbauteil (120),
wobei das Führungsbauteil (120) und die Generatoreinheit (110) derart ausgebildet sind, dass die Generatoreinheit (110) auf dem Führungsbauteil (120) entlang eines wenigstens abschnittsweise gebogenen Bewegungspfads (330) beweglich geführt wird; und
wobei das Führungsbauteil (120) ausgebildet ist, um eine Orientierung der Generatoreinheit (110) senkrecht zu dem Bewegungspfad (330) entlang desselben zu führen und zu verändern.

2. Solargenerator (100) nach Anspruch 1, bei dem die Generatoreinheit (110) wenigstens ein Fotovoltaikmodul (160) umfasst.

3. Solargenerator (100) nach einem der vorhergehenden Ansprüche, bei dem das Führungsbauteil (120) wenigstens abschnittsweise im Wesentlichen kreisbogenförmig oder ellipsenbogenförmig ausgestaltet ist.

4. Solargenerator (100) nach einem der vorhergehenden Ansprüche, bei dem sich das Führungsbauteil (120 um einen zentralen Punkt über einen vorbestimmten Winkelbereich von wenigstens 45° herum erstreckt.

5. Solargenerator (100) nach einem der vorhergehenden Ansprüche, der genau eine Antriebseinheit (140) umfasst, wobei die Antriebseinheit (140) ausgebildet ist, um die Generatoreinheit (110) entlang des Bewegungspfads (330) zu bewegen.

6. Solargenerator (100) nach Anspruch 5, bei dem die Antriebseinheit (140) einen Elektromotor (260) und ein Getriebe (270) umfasst, über das der Elektromotor (260) die Generatoreinheit (110) antreibt.

7. Solargenerator (100) nach Anspruch 6, bei dem die Antriebseinheit (140) eine mit der Generatoreinheit (110) mechanisch gekoppelte Mitnehmerstange (200) umfasst, die derart ausgebildet und angeordnet ist, dass die Generatoreinheit (110) durch ein Schwenken der Mitnehmerstange (200) um eine Achse entlang des Bewegungspfads (330) antreibbar ist.

8. Solargenerator (100) nach einem der Ansprüche 5 bis 7, bei dem die Antriebseinheit (140) ausgebildet ist, um die Generatoreinheit (110) mit einer gleichmäßigen Geschwindigkeit, beispielsweise einer gleichmäßigen Winkelgeschwindigkeit und/oder Translationsgeschwindigkeit, entlang des Bewegungspfads (330) zu bewegen.

9. Solargenerator (100) nach einem der vorhergehenden Ansprüche, bei der die Generatoreinheit (110) einen Profilschienenwagen (180) und das Führungsbauteil (120) eine Profilschiene (320) umfassen, oder bei der die Generatoreinheit (110) einen Laufwagen und das Führungsbauteil (120) eine Führungsschiene für den Laufwagen umfassen.

10. Solargenerator (100) nach einem der vorhergehenden Ansprüche, bei dem die Generatoreinheit (110) einen Wagen (170), beispielsweise einen Profilschienenwagen (180), und das Führungsbauteil (120) eine Schiene (310), beispielsweise eine Profilschiene (320) umfasst, wobei der Wagen (170) entlang der Schiene (310) beweglich geführt ist, und wobei die Schiene (310) ausgebildet ist, um die Orientierung des Wagens (170) senkrecht zu dem Bewegungspfad (330) entlang desselben zu führen und zu verändern.

11. Solargenerator (100) nach Anspruch 10, bei dem eine Laufbahn der Schiene (310) unterschiedlich verdreht ist, um die Änderung der Orientierung zu bewirken.

12. Solargenerator (100) nach einem der vorhergehenden Ansprüche, bei dem das Führungsbauteil (120) derart ausgebildet ist, dass ausgehend von einer vorbestimmten Lage des Führungsbauteils (120) die Generatoreinheit (110) hinsichtlich ihrer Orientierung senkrecht zu dem Bewegungspfad (330) bei einer Bewegung entlang des Bewegungspfads (330) einem Orientierungsverlauf senkrecht zu dem Bewegungspfad (330) folgt, der auf einem für eine vorbestimmte Region auf der Erde vorbestimmten Sonnenstandsverlauf basiert.

13. Solargenerator (100) nach Anspruch 12, bei der Sonnenstandsverlauf bezogen aud die vorbestimmte Region einem Tag eines Wintermonats und/oder eines Herbstmonats entspricht.

14. Schiene (310) für einen Wagen (170), die sich entlang eines wenigstens abschnittsweise gebogenen Bewegungspfads (330) erstreckt und derart ausgebildet ist, dass der Wagen (170) entlang der Schiene (310) beweglich geführt wird,
wobei die Schiene (310) ausgebildet ist, um eine Orientierung des Wagens (170) senkrecht zu dem Bewegungspfad (330) entlang desselben zu führen und zu verändern.

15. Schiene (310) nach Anspruch 14, auf der ein wenigstens ein Wagen (170) beweglich angeordnet ist.
